# EUROPÄISCHE PATENTSCHRIFT

(11) **EP 0 885 786 B1**
(45) Veröffentlichungstag und Bekanntmachung des Hinweises auf die Patenterteilung: **07.12.2005**
(21) Anmeldenummer: 98111002.6
(22) Anmeldetag: 16.06.1998
(51) Int. Cl.: B60R 22/48

(54) **Ablaufschaltung für Sitzgurte**
Trace circuit for seat belts
Circuit de traçage pour ceintures de sécurité

(30) Priorität: 20.06.1997 US 879725
(43) Veröffentlichungstag der Anmeldung: 23.12.1998
(73) Patentinhaber: DEERE & COMPANY, Moline, Illinois 61265-8098 (US)
(72) Erfinder: Shoemaker, Jim Milton, Horicon, Wisconsin 53032 (US)
(74) Vertreter: Lau-Loskill, Philipp

(56) Entgegenhaltungen:
- DE-A- 2 260 927
- FR-A- 2 195 209
- US-A- 3 777 180
- US-A- 3 876 974
- US-A- 3 883 843
- US-A- 3 906 441
- US-A- 4 096 468

## Beschreibung

Die Erfindung bezieht sich auf eine Ablaufschaltung für Nutzfahrzeuge mit wenigstens einer nicht abschaltbaren Spannungsquelle und einer ein- und ausschaltbaren Spannungsquelle, einem durch den Bediener einrastbaren und ausrastbaren Sitzgurt, einem Sitzgurtschalter, der auf das Einrasten des Sitzgurtes anspricht, und einem Sitzschalter, der auf die Anwesenheit des Bedieners auf dem Bedienersitz anspricht.

An Fahrzeugen, wie Kompaktladern und ähnlichen Nutzfahrzeugen, ist es notwendig, ein Sitzgurtsystem vorzusehen, das sicherstellt, daß der Bediener auf der Fahrerplattform einer richtigen Vorgehensweise folgt, die beinhaltet, daß er sich zuerst auf den Fahrzeugsitz setzt und dann den Sicherheitsgurt schließt, um sicherzustellen, daß der Bediener sich nicht nur auf den geschlossenen Gurt setzt. Desweiteren muß das Sitzgurtsystem die Fähigkeit haben, zu verhindern, daß eine Logikschaltung dadurch zurückgesetzt wird, daß der Bediener kurzzeitig auf dem Sitz federt. Schaltungen, die Mikrokontroller beinhalten, können für solche Sitzgurtsysteme verwendet werden. Die Mikrokontroller benötigen aber eine gefilterte und reduzierte geregelte Spannung anstelle von Batteriegleichspannung, wodurch dem System Kompliziertheit und Kosten hinzugefügt werden. Eine Schaltung in einem Nutzfahrzeug muß häufig in der Lage sein, bei Spannungsextremen zu arbeiten, die von einem Minimum von einigen Volt bis zu einer Überbrückungsstartspannung, die ein Vielfaches dieses Minimums beträgt, reichen können.

Ein anderes Problem, daß mit Sitzgurt-Ablaufschaltungen verknüpft ist, besteht darin, sicherzustellen, daß die richtige Abfolge von Ereignissen vor oder nach dem Einschalten des Zündschalters erkannt wird, ohne daß jedoch ein merklicher Stromabfluß verursacht wird, wenn sich der Schalter in seiner Aus-Stellung befindet. Wenn sich ein Warnsignal, wie eine Lampe am Armaturenbrett, bei ausgeschaltetem Zündschalter einschalten läßt, kann die Batterie unabsichtlich entladen werden.

Die DE 22 60 927 A offenbart, gemäß dem Oberbegriff des Anspruchs 1, eine Sicherheitseinrichtung zum Schutz von Insassen eines Fahrzeugs mit einem ersten Auslöseschalter zur Betätigung eines Anlaßsperrsystems und eines Warnsystem, der durch eine logische Verknüpfungsschaltung der Sitz- und Gurtschalter so gesteuert wird, daß ein Anlaßvorgang verhindert und ein Signal des Warnsystems abgegeben wird, wenn bei einer belasteten Sitzgelegenheit der zughörige Sicherheitsgurt entweder nicht geschlossen ist oder schon vor der Belastung geschlossen wurde.

Die mit der Erfindung zu lösende Aufgabe wird darin gesehen, eine verbesserte Sitzgurt-Ablaufschaltung vorzusehen, durch die die genannten Probleme überwunden werden. Die Ablaufschaltung soll sicherstellen, daß sich der Bediener nicht nur auf den geschlossenen Sitzgurt setzt. Sie soll ein zeitweiliges Federn des Bedieners auf dem Sitz aufnehmen, ohne die Logikschaltung zurückzusetzen. Dabei soll kein Mikrokontroller erforderlich sein, sondern lediglich ein einfacher und kostengünstiger Aufbau. Die Ablaufschaltung soll sich besonders gut für Nutzfahrzeuge eignen, über einen weiten Spannungsbereich zuverlässig arbeiten, sehr einfach und robust sein und die Verwendung komplizierter und kostenintensiver Filter und Spannungsregulatoren sowie Relais vermeiden. Sie soll eine richtige Logikabfolge bei eingeschaltetem oder ausgeschaltetem Zündschalter erkennen, bei ausgeschaltetem Zündschalter den Ladungsabfluß der Batterie unterbinden und nur dann ein Warnsignal für eine unpassende Abfolge liefern, wenn der Zündschalter eingeschaltet wurde.

Die Aufgabe wird erfindungsgemäß durch die Lehre des Patentanspruchs 1 gelöst. Weitere vorteilhafte Ausgestaltungen und Weiterbildungen gehen aus den Unteransprüchen hervor.

Eine Sitzgurt-Ablaufschaltung, die in Übereinstimmung mit der Lehre der vorliegenden Erfindung aufgebaut ist, beinhaltet einen einfachen, aus diskreten Bauteilen aufgebauten Logikkreis mit Transistoren, die wahlweise über Sitz- und Gurtschalter mit der Fahrzeugbatterie verbunden sind. Die Transistoren arbeiten entweder in einem Sperrmodus oder in einem Stromsättigungsmodus (Schalttransistor), wobei die Versorgungsspannungen zwischen extrem niedriger Spannung bei schwachen der Fahrzeugbatterie verbunden sind. Die Transistoren arbeiten entweder in einem Sperrmodus oder in einem Stromsättigungsmodus (Schalttransistor), wobei die Versorgungsspannungen zwischen extrem niedriger Spannung bei schwachen Batteriebedingungen, wie sie gegeben sind, wenn das Fahrzeug bei kalten Temperaturen gestartet wird, und verhältnismäßig hohen Spannungen (Spannungsspitzen), die häufig auftreten, wenn ein Fahrzeug fremdgestartet wird, variieren können. Um die Montage zu erleichtern und die Schaltung zu vereinfachen, beinhaltet die Schaltung möglichst viele identische Widerstände und Transistoren. Komplizierte auf Mikrokontrollern beruhende Logik sowie Spannungsregulatoren und Filter wurden vermieden, um die Kosten zu reduzieren und die Zuverlässigkeit in aggressiver Umgebung, der Nutzfahrzeuge häufig ausgesetzt sind, zu steigern. Das System kommt ohne Relais aus und die Kosten eines solchen Systems betragen nur einen Bruchteil derer einiger anderer Systeme.

Die Schaltung erkennt die richtige Logikabfolge, sowohl wenn sich der Zündschalter in der Ein- als auch in der Aus-Stellung befindet, wobei ein Warnsignal für einen falschen Ablauf aber nur erfolgt, nachdem der Zündschalter eingeschaltet wurde. Batterieentladung wird praktisch unterbunden, wenn der Zündschalter sich in der Aus-Stellung befindet. Die Schaltung verhindert zeitweise Unterbrechungen, die dadurch verursacht werden, daß der Bediener vorübergehend auf dem Sitz auf und ab federt, wobei aber die richtige Vorgehensweise durchgeführt werden muß, um das Warnsignal zu verhindern. Wenn der Sitzgurtschalter in offener Stellung versagt oder offen gelassen wird, wird die Schaltungslogik nicht zufriedengestellt. Wenn der Sitzgurtschalter in geschlossener Stellung versagt, ist die Logik nicht zufriedengestellt. Wenn der Sitzschalter in geschlossener Stellung versagt, erfordert die Logik immer noch die Benutzung des Sitzgurts.

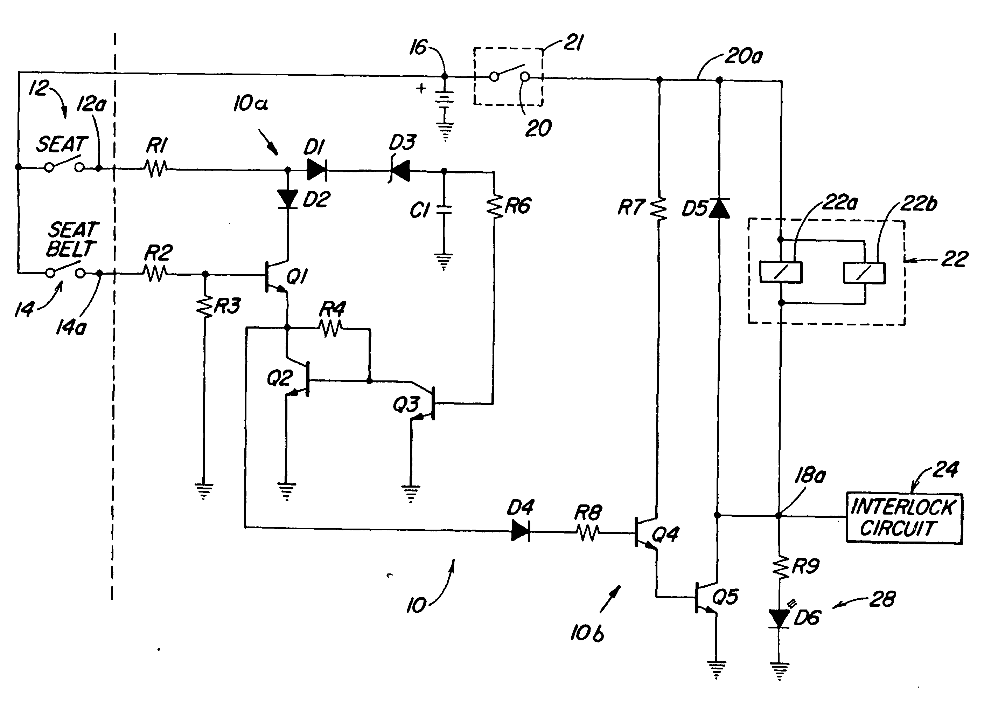

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Die einzige Figur zeigt das Schema einer Ablaufschaltung für Sitzgurte.

Es wird nun auf die Zeichnung Bezug genommen, in der eine Ablaufschaltung 10 für Sitzgurte gezeigt wird, die Eingänge 12a und 14a aufweist. Diese sind über einen Sitzschalter 12 bzw. einen Sitzgurtschalter 14 eines nicht dargestellten Nutzfahrzeugs, beispielsweise Kompaktlader, mit einer nicht ausschaltbaren Batteriespannungsquelle, allgemein bei 16 dargestellt, verbunden. Die Batteriespannungsquelle kann üblicherweise über einen weiten Spannungsbereich variieren. Die Ablaufschaltung 10 beinhaltet eine Ausgabestelle 18a, die über einen Zündschalter 21 eine zu- und abschaltbare Versorgungsleitung 20a und Steuerelemente 22a und 22b eines Zusatzgerätesteuerkreises 22 des Fahrzeugs mit der Spannungsquelle 16 verbunden ist. Die Ausgabestelle 18a ist auch mit einem weiteren Verriegelungskreis 24 des Fahrzeugs verbunden, der auf das Signal der Ausgabestelle 18a anspricht, um vorgewählte Fahrzeugarbeitsvorgänge zu unterbinden, sofern eine vorgegebene Abfolge von Ereignissen an dem Fahrzeug, die die Bedienung des Sitzschalters 12 und des Sitzgurtschalters 14 einschließt, nicht auftritt. Mit der Ausgabestelle 18a ist auch eine Warneinrichtung 28 verbunden, um eine wahrnehmbare Warnung zu erzeugen, wenn eine falsche Abfolge der Sitzschalter- und Sitzgurtschalter-Sequenz durch die Ablaufschaltung 10 festgestellt wird.

Die Ablaufschaltung 10 beinhaltet einen ersten diskreten Transistorkreis 10a, dessen Eingänge über erste Anschlußleitungen von Widerständen R1 und R2 mit entsprechenden Anschlußstellen 12a und 14a verbunden sind, so daß Energie nur von der nicht abschaltbaren Batteriespannungsquelle 16 über den geschlossenen Sitzschalter 12 und/oder den geschlossenen Sitzgurtschalter 14 zu dem Transistorkreis 10a geführt wird. Die gegenüberliegende Anschlußleitung des Widerstands R1 ist mit den Eingangsanschlüssen der Dioden D1 und D2 verbunden, und die Diode D1 ist mit einer Zener-Diode D3 verbunden. Die Diode D2 ist mit dem Kollektor eines n-p-n Transistors Q1 verbunden, dessen Basis mit einem Spannungsteilerkreis verbunden ist, der den Widerstand R2 enthält, und mit einem Widerstand R3 geerdet ist. Der Emitter des Transistors Q1 ist mit dem Kollektor eines zweiten Transistors Q2, dessen Emitter geerdet ist, verbunden. Ein Rückkopplungs-Widerstand R4 ist einerseits mit dem Kollektor des Transistors Q2 und andererseits mit der Basis des Transistors Q2 sowie mit dem Kollektor eines dritten Transistors Q3 verbunden, wobei letzterer einen geerdeten Emitter und eine Basis aufweist, die über einen Widerstand R6 mit einem das Zeitverhalten bestimmenden geerdeten Kondensator C1 verbunden ist. Der Kondensator C1 ist über die Dioden D3 und D1 mit dem Widerstand R1 sowie der Diode D2 verbunden.

Die Ablaufschaltung 10 beinhaltet desweiteren einen zweiten diskreten Transistorkreis 10b mit einem Eingangstransistor Q4 dessen Basis über einen Widerstand R8 und eine Diode D4 mit dem Emitter des Transistors Q1 verbunden ist. Der Kollektor des Transistors Q4 ist über einen Widerstand R7 und die zu- und abschaltbare Versorgungsleitung 20a mit der Batteriespannungsquelle 16 verbindbar. Der Emitter des Transistors Q4 ist mit der Basis eines Transistors Q5 mit geerdetem Emitter verbindbar. Der Kollektor dieses Transistors Q5 ist mit der Ausgabestelle 18a verbunden. Die Ausgabestelle 18a ist desweiteren durch eine Spannungsspitzen abschneidende Diode D5 mit der zu- und abschaltbaren Versorgunsleitung 20a verbunden. Die Warneinrichtung 28 enthält eine Licht abgebende Diode D6, die mit einem Strom beschränkenden Widerstand R9 zwischen der Ausgabestelle 18a und Erde in Serie geschaltet ist.

Bei normalem Betrieb, nimmt der Bediener eine Position auf dem Fahrzeugsitz ein, bei der der Sitzschalter 12 einen Strompfad schließt, so daß der Kondensator C1 über den Widerstand R1 und die Dioden D1 und D3 aufgeladen wird. Die Spannung über dem Kondensator C1 steigt auf ein Niveau, bei dem der Transistor Q3 eingeschaltet wird, um die Basis des Transistors Q2 unter der Einschalt-Spannung zu halten, so daß der Transistor Q2 ausgeschaltet bleibt. Danach wird der Sitzgurt um den Bediener gelegt und der Sitzgurtschalter 14 geschlossen, wobei der Transistor Q1 einschaltet. Da durch den sich in Ein-Stellung befindenden Transistor Q3 der Transistor Q2 in seiner Aus-Stellung gehalten wird, wird Strom vom dem Sitzschalter 12 durch die Diode D2 und den Transistor Q1 über die Diode D4 und den Widerstand R8 zum Eingang des Transistorkreises 10b geliefert, so daß die kaskadenartig angeordneten Transistoren Q4 und Q5 eingeschaltet werden und die Ausgabestelle 18a freigegeben wird, da sie über den Transistor Q5 praktisch geerdet wird. Der Kondensator C1 liefert eine Zeitverzögerung, so daß nicht jedes vorübergehende Öffnen des Sitzschalters 12, daß beispielsweise dadurch verursacht wird, daß der Bediener auf dem Sitz federt, den Transistor Q3 aus seiner Ein- in seine Aus-Stellung schaltet.

Wenn der Sitzgurt zuerst gesichert wird oder gesichert bleibt, ist der Sitzgurtschalter 14 geschlossen, so daß die Transistoren Q1 und Q2 eingeschaltet sind und den Kondensator C1 am Aufladen hindern. Dadurch läßt sich der Transistor Q3 nicht einschalten und der Transistor Q2 bleibt eingeschaltet, da der Basis des Transistors Q2 durch den Widerstand R4 ein Einschalt-Strom zugeführt wird. Wenn der Sitzschalter 12 geschlossen wird, nachdem der Sitzgurtschalter 14 geschlossen wurde, wird der Strom durch den Widerstand R1 über die Diode D2 und die Transistoren Q1 und Q2 abgeleitet, so daß sich keine Spannung über dem Kondensator C1 aufbauen kann, um den Transistor Q3 einzuschalten und um die richtige Ablauflogik des Schließens des Sitzschalters gefolgt vom Schließen des Sitzgurtschalters zu erfüllen. Das Ausgangssignal des Transistorkreises 10a bleibt niedrig, so daß die kaskadenartigen Transistoren Q4 und Q5 des Transistorkreises 10b offen bleiben und sich die Ausgabestelle 18a auf einem hohen Niveau befindet. Der Verriegelungskreis 24 spricht auf ein hohes Signal der Ausgabestelle 18a an, um wahlweise den Betrieb von vorgewählten Systemen des Fahrzeugs zu verhindern, bis die richtige Abfolge befolgt wird und die Transistoren Q4 und Q5 eingeschaltet werden, um die Ausgabestelle 18a zu erden. Wenn der Zündschalter 20 geschlossen ist und die Ausgabestelle 18a durch ein hohes Ausgabeniveau einen falschen Ablauf anzeigt, wird durch die LED D6 ein sichtbares Ablaufwarnsignal abgegeben, da von dem Zündschalter 21, dem Zusatzgerätesteuerkreis 22 und dem Widerstand R9 Strom durch die LED D6 fließt. Die Steuerelemente 22a und 22b sind solange deaktiviert, um den Betrieb von Fahrzeugzusatzgeräten, die mit dem Zusatzgerätesteuerkreis 22 verknüpft sind, zu verhindern, bis der richtige Ablauf befolgt wird und die Ausgabestelle 18a durch ein von dem Transistorkreis 10a über die Diode D4 und den Widerstand R8 kommendes Aktivierungssignal geerdet wird. Wenn der Sitzgurtschalter 14 in geschlossenem Zustand versagt oder in geschlossenem Zustand verblieben ist, indem der Sitzgurt über den Sitz gelegt wird, ohne daß sich der Bediener auf dem Sitz befindet, oder wenn der Sitzgurtschalter 14 in offenem Zustand versagt, wird die Ablauflogik nicht erfüllt. Wenn der Sitzschalter 12 in geschlossenem Zustand versagt, benötigt die Logik immer noch die Benutzung des Sitzgurtes, um den Betrieb zu ermöglichen.

Die Transistoren der getrennten Transistorkreise 10a und 10b arbeiten entweder in einem vollständig stromgesättigten Zustand, um die Unempfindlichkeit gegen hohe Spannungsschwankungen zu erhöhen, oder in einem vollständig gesperrten Zustand, um einen Stromabfluß zu reduzieren. Ein falscher Logikablauf ist selbst dann feststellbar, wenn der Zündschalter 21 (vorzugsweise ein Teil des Fahrzeughauptzündschalters) ausgeschaltet ist. Die Betätigung der Warneinrichtung 28 wird aber verzögert bis der Zündschalter eingeschaltet wird, um einen Stromabfluß zu reduzieren.

Beispielsweise wurden die folgenden Bauteilwerte ermittelt, die bei einer Nennspannung des Fahrzeugsystems von 12 Volt einen guten Schaltungsbetrieb über einen Spannungsbereich von niedrigen Werten während Kaltstartbedingungen und hohen Werte beim Überbrückungsstart gewährleisten.

| | |
|---|---|
| R1, R2, R3 und R9 | 1 kOhm |
| R4 und R8 | 4,7 kOhm |
| R6 | 33 kOhm |
| R7 | 680 Ohm |
| D3 | 3,3 V Zener |
| C1 | 4,7 µF |

Beispielsweise kann anstelle des mit der Fahrzeugbatterie 20 verbundenen Zündschalters 21 auch eine gesonderte zu- und abschaltbare Batteriespannungsquelle verwendet werden.

## Patentansprüche

1. Ablaufschaltung für Nutzfahrzeuge mit wenigstens einer nicht abschaltbaren Spannungsquelle (16) und einer ein- und ausschaltbaren Spannungsquelle (20), einem durch den Bediener einrastbaren und ausrastbaren Sitzgurt, einem Sitzgurtschalter (14), der auf das Einrasten des Sitzgurtes anspricht, und einem Sitzschalter (12), der auf die Anwesenheit des Bedieners auf dem Bedienersitz anspricht, **dadurch gekennzeichnet, daß** der Sitzschalter (12) und der Sitzgurtschalter (14) mit ihren Eingängen mit der nicht abschaltbaren Spannungsquelle (16) und mit ihren umschaltbaren Ausgängen (12a, 14a) mit einem ersten Transistorkreis (10a) verbunden sind, welcher auf die Betätigung des Sitzschalters (12) und des Sitzgurtschalters (14) anspricht, daß ein zweiter Transistorkreis (10b) mit dem ersten Transistorkreis (10a) verbunden ist und eine Ausgangsstelle (18a) aufweist, und daß an die Ausgangsstelle (18a) eine Warneinrichtung (28) angeschlossen ist, derart, daß die Warneinrichtung (28) ein Ausgabesignal bei unrichtiger Abfolge der Betätigung des Sitzschalters (12) und des Sitzgurtschalters (14) abgibt, und daß der erste Transistorkreis (10a) eine Ein-Stellung und eine Sperrstellung aufweist und wenigstens einen Transistor enthält, der entweder in einem stromgesättigten Zustand oder in einem Sperrzustand arbeitet, um so in der Sperrstellung den Stromabfluß zu begrenzen und um eine Störfestigkeit gegen große Spannungsschwankungen in der nicht abschaltbaren Spannungsquelle (16) zu gewährleisten.

2. Ablaufschaltung nach Anspruch 1, **dadurch gekennzeichnet, daß** der erste Transistorkreis (10a) einen ersten mit dem zweiten Transistorkreis (10b) verbundenen Ausgang aufweist und an den zweiten Transistorkreis (10b) unabhängig vom Zustand der ein- und ausschaltbaren Spannungsquelle (20) Ablaufsignale abgibt.

3. Ablaufschaltung nach Anspruch 1 oder 2, **dadurch gekennzeichnet, daß** die Warneinrichtung (28) mit der ein- und ausschaltbaren Spannungsquelle (20) derart verbunden ist, daß die Anzeige einer falschen Abfolge der Bedienung des Sitzschalters (12) und des Sitzgurtschalters (14) nur dann angezeigt wird, wenn die Spannungsquelle (20) eingeschaltet ist.

4. Ablaufschaltung nach Anspruch 3, **dadurch gekennzeichnet, daß** die Warneinrichtung (28) über einen Zusatzgerätesteuerkreis (22) des Fahrzeugs mit der Spannungsquelle (20) derart verbunden ist, daß der Zusatzgerätesteuerkreis (22) deaktiviert wird, wenn ein Ausgabesignal über eine falsche Abfolge vorliegt.

5. Ablaufschaltung nach einem der Ansprüche 1 bis 4, **dadurch gekennzeichnet, daß** der erste Transistorkreis (10a) mit der nicht abschaltbaren Spannungsquelle (20) durch den Sitzschalter (12) und den Sitzgurtschalter (14) in Verbindung steht.

6. Ablaufschaltung nach einem der Ansprüche 1 bis 5, **dadurch gekennzeichnet, daß** der zweite Transistorkreis (10b) mit der ein- und ausschaltbaren Spannungsquelle (20) derart verbunden ist, daß der zweite Transistorkreis (10b) sich in einem Aus-Zustand befindet, wenn die schaltbare Spannungsquelle (20) ausgeschaltet ist.

7. Ablaufschaltung nach einem der Ansprüche 1 bis 6, **dadurch gekennzeichnet, daß** der erste Transistorkreis (10a) mit der nicht abschaltbaren Spannungsquelle (16) nur durch den Sitzschalter (12) und den Sitzgurtschalter (14) in Verbindung steht, und daß der erste Transistorkreis (10a) selbst dann ein Ablauflogiksignal an den zweiten Transistorkreis (10b) liefert und aufrechterhält, wenn die ein- und ausschaltbare Spannungsquelle (20) ausgeschaltet ist.

8. Ablaufschaltung nach einem der Ansprüche 1 bis 7, **dadurch gekennzeichnet, daß** der erste und der zweite Transistorkreis (10a, 10b) Transistoren enthalten, die sich entweder in einem Stromsättigungszustand oder in einem Sperrzustand befinden, wenn die ein- und ausschaltbare Spannungsquelle (20) eingeschaltet ist.

9. Ablaufschaltung nach einem der Ansprüche 1 bis 8, **dadurch gekennzeichnet, daß** der erste Transistorkreis (10a) einen R-C-Verzögerungskreis enthält, der mit dem Sitzschalter (12) über eine Zener-Diode (D3) verbunden ist, um ein falsches Ablaufsignal zu verhindern, das aus einem zeitweiligen Öffnen des Sitzschalters (12) resultiert.

10. Ablaufschaltung nach einem der Ansprüche 1 bis 9, **dadurch gekennzeichnet, daß** die ein- und ausschaltbare Spannungsquelle (20) ein Ausgangsanschluß eines Zündschalters (21) ist, dessen Eingangsanschluß mit einer Batterie (16) verbunden ist, wobei eine Anzeige einer falschen Abfolge nur dann erfolgt, wenn der Zündschalter (21) sich in seiner Ein-Stellung befindet.

11. Ablaufschaltung nach Anspruch 10, **dadurch gekennzeichnet, daß** der erste Transistorkreis (10a) ein Ablauflogiksignal an den zweiten Transistorkreis (10b) liefert und aufrechterhält, selbst dann, wenn sich der Zündschalter (21) in seiner Aus-Stellung befindet.

12. Ablaufschaltung nach einem der Ansprüche 1 bis 11, **dadurch gekennzeichnet, daß** der Sitzschalter (12) über einen Zeitverzögerungskreis mit einem ersten Transistor (Q3), dessen Emitter geerdet ist, verbunden ist, daß der Kollektor des ersten Transistors (Q3) mit der Basis und dem Kollektor eines ersten von zwei kaskadenartigen Transistoren (Q2) verbunden ist, daß die Basis des zweiten kaskadenartigen Transistors (Q1) mit dem Sitzgurtschalter (14) verbunden ist und daß der erste kaskadenartige Transistor (Q2) nur dann ein Aktivierungssignal an den zweiten Transistorkreis (10b) liefert, wenn der Sitzschalter (12) vor dem Schließen des Sitzgurtschalters (14) geschlossen wird.

13. Ablaufschaltung nach Anspruch 12, **dadurch gekennzeichnet, daß** der Sitzschalter (12) über eine Zener-Diode (D3) mit einem Zeitverzögerungskreis verbunden ist, wobei die Zener-Spannung der Zener-Diode (D3) größer ist als der Spannungsabfall über den kaskadenartig angeordneten Transistoren (Q1, Q2), wenn sich diese in ihren Stromsättigungszustand befinden, und daß die kaskadenartigen Transistoren (Q1, Q2) mit dem Zeitverzögerungskreis verbunden sind, um den ersten Transistor (Q3) am Einschalten zu hindern, wenn der Sitzschalter (12) offen ist.

14. Ablaufschaltung nach einem der Ansprüche 1 bis 13, **dadurch gekennzeichnet, daß** der zweite Transistorkreis (10b) einen Steuertransistor enthält, der in einem Aktivierungsmodus wirksam ist, um die Ausgabestelle (18a) zu erden, und den Fahrzeugbetrieb unabhängig von der Relais-Anordnung in der Sitz- und Sitzgurt-Ablaufschaltung zu ermöglichen.

## Claims

1. A sequencing circuit for utility vehicles with at least one un-switched voltage source (16) and an on and off switchable voltage source (20), a seat belt which can be done up and undone by the user, a seat belt switch (14) which responds to doing up the seat belt and a seat switch (12) which responds to the presence of the user on the user seat, **characterized in that** the seat switch (12) and the seat belt switch (14) are connected at their inputs to the un-switched voltage source (16) and at their switched outputs (12a, 14a) to a first transistor circuit (10a) which responds to actuation of the seat switch (12) and of the seat belt switch (14), **in that** a second transistor circuit (10b) is connected to the first transistor circuit (10a) and has an output node (18a), and **in that** a warning device (28) is connected to the output node (18a) in such a manner that the warning device (28) issues a warning signal on an incorrect sequence of actuation of the seat switch (12) and the seat belt switch (14), and **in that** the first transistor circuit (10a) has an on state and a blocked state and includes at least one transistor which operates either in a saturated current state or in a blocked state, in order thus to limit the current flow in the blocked position and in order to ensure immunity to large voltage fluctuations in the un-switched voltage source (16).

2. A sequencing circuit according to claim 1, **characterized in that** the first transistor circuit (10a) has a first output connected to the second transistor circuit (10b) and provides a sequencing signal to the second transistor circuit (10b) independent of the state of the switchable voltage source (20).

3. A sequencing circuit according to claim 1 or 2, **characterized in that** the warning device (28) is so connected to the switchable voltage source (20) that the indication of a false sequence of operation of the seat switch (12) and the seat belt switch (14) is only given when the voltage source (20) is switched on.

4. A sequencing circuit according to claim 3, **characterized in that** the warning device (28) is so coupled through an auxiliary apparatus control circuit (22) of the vehicle to the voltage source (20) that the auxiliary apparatus control circuit (22) is deactivated when an output signal from a false sequence is present.

5. A sequencing circuit according to any of claims 1 to 4, **characterized in that** the first transistor circuit (10a) is coupled to the un-switched voltage source (16) by the seat switch (12) and the seat belt switch (14).

6. A sequencing circuit according to any of claims 1 to 5, **characterized in that** the second transistor circuit (10b) is so connected to the on and off switchable voltage source (20) that the second transistor circuit (10b) is in an off state when the on and off switchable voltage source (20) is turned off.

7. A sequencing circuit according to any of claims 1 to 6, **characterized in that** the first transistor circuit (10a) is connected to the un-switched voltage source (16) only through the seat switch (12) and the seat belt switch (14), and **in that** the first transistor circuit (10a) applies and maintains a sequence logic signal to the second transistor circuit (10b) even when the on and off switchable voltage source (20) is switched off.

8. A sequencing circuit according to any of claims 1 to 7, **characterized in that** the first and second transistor circuits (10a, 10b) contain transistors which are either in a saturated current state or in a blocked state when the on and off switchable voltage source (20) is switched on.

9. A sequencing circuit according to any of claims 1 to 8, **characterized in that** the first transistor circuit (10a) includes an RC delay circuit which is connected to the seat switch (12) through a Zener diode (D3), in order to prevent an erroneous sequence signal which results from temporary opening of the seat switch (12).

10. A sequencing circuit according to any of claims 1 to 9, **characterized in that** the on and off switchable voltage source (20) is an output terminal of an ignition switch (21) whose input terminal is connected to a battery (16), whereby an indication of a false sequence only takes place when the ignition switch (21) is in its on position.

11. A sequencing circuit according to claim 10, **characterized in that** the first transistor circuit (10a) applies and maintains a sequence logic signal to the second transistor circuit (10b) even when the ignition switch (21) is on its off position.

12. A sequencing circuit according to any of claims 1 to 11, **characterized in that** the seat switch (12) is connected to a first transistor (Q3) whose emitter is earthed, **in that** the collector of the first transistor (Q3) is connected to the base and the collector of a first of two cascaded transistors (Q2), **in that** the base of the second cascaded transistor (Q1) is connected to the seat belt switch (14) and **in that** the first cascaded transistor (Q2) only applies an activating signal to the second transistor circuit (10b) when the seat switch (12) is closed before closing the seat belt switch (14).

13. A sequencing circuit according to claim 12, **characterized in that** the seat switch (12) is connected through a Zener diode (D3) to a time delay circuit, wherein the Zener voltage of the Zener diode (D3) is greater than the voltage drop across the cascaded transistors (Q1, Q2) when these are in their saturated current state, and **in that** the cascaded transistors (Q1, Q2) are connected to the time delay circuit in order to prevent the first transistor (Q3) switching on when the seat switch (12) is open.

14. A sequencing circuit according to any of claims 1 to 13, **characterized in that** the second transistor circuit (10b) includes a control transistor which is effective in an activated mode to earth the output node (18a) and enable operation of the vehicle independently of the relay arrangement in the seat and seat belt sequencing circuit.

## Revendications

1. Circuit séquentiel pour véhicules utilitaires avec au moins une source de tension non interruptible (16) et une source de tension pouvant être contactée et coupée (20), une ceinture de siège pouvant être encliquetée et décliquetée par l'opérateur, un interrupteur de ceinture de siège (14) qui réagit à l'encliquetage de la ceinture du siège, et un interrupteur de siège (12) qui réagit à la présence de l'opérateur sur le siège de l'opérateur, **caractérisé en ce que** l'interrupteur de siège (12) et l'interrupteur de ceinture de siège (14) sont reliés par leurs entrées à la source de tension non interruptible (16) et par leurs sorties commutables (12a, 14a) à un premier circuit à transistors (10a), qui réagit à l'actionnement de l'interrupteur de siège (12) et de l'interrupteur de ceinture de siège (14), **en ce qu'**un deuxième circuit à transistors (10b) est relié au premier circuit à transistors (10a) et comporte un point de sortie (18a) et **en ce qu'**au point de sortie (18a) est branché un dispositif d'alarme (28), de telle sorte que le dispositif d'alarme (28) émet un signal de sortie en cas de séquence non conforme de l'actionnement de l'interrupteur de siège (12) et de l'interrupteur de ceinture de siège (14), et **en ce que** le premier circuit à transistors (10a) présente une position « marche » et une position de blocage et comporte au moins un transistor qui travaille soit dans un état saturé de courant, soit dans un état de blocage, pour limiter ainsi dans la position de blocage l'écoulement du courant et pour assurer une résistance aux perturbations d'importantes fluctuations de tension dans la source de tension non interruptible (16).

2. Circuit séquentiel selon la revendication 1, **caractérisé en ce que** le premier circuit à transistors (10a) comporte une première sortie reliée au deuxième circuit à transistors (10b) et délivre des signaux de séquence au deuxième circuit à transistors (10b), indépendamment de l'état de la source de tension pouvant être contactée et coupée (20).

3. Circuit séquentiel selon la revendication 1 ou 2, **caractérisé en ce que** le dispositif d'alarme (28) est relié à la source de tension pouvant être contactée et coupée (20) de telle sorte que l'affichage d'une séquence erronée de la commande de l'interrupteur de siège (12) et de l'interrupteur de ceinture de siège (14) n'est affichée que quand la source de tension (20) est contactée.

4. Circuit séquentiel selon la revendication 3, **caractérisé en ce que** le dispositif d'alarme (28) est relié à la source de tension (20) par l'intermédiaire d'un circuit de commande d'appareils supplémentaires (22) de telle sorte que le circuit de commande d'appareils supplémentaires (22) est désactivé quand existe un signal de sortie à propos d'une séquence erronée.

5. Circuit séquentiel selon l'une des revendications 1 à 4, **caractérisé en ce que** le premier circuit à transistors (10a) est en liaison avec la source de tension non interruptible (20) par l'interrupteur de siège (12) et par l'interrupteur de ceinture de siège (14).

6. Circuit séquentiel selon l'une des revendications 1 à 5, **caractérisé en ce que** le deuxième circuit à transistors (10b) est relié à la source de tension pouvant être contactée et coupée (20) de telle sorte que le deuxième circuit à transistors (10b) se trouve dans un état d'arrêt quand la source de tension interruptible (20) est coupée.

7. Circuit séquentiel selon l'une des revendications 1 à 6, **caractérisé en ce que** le premier circuit à transistors (10a) ne se trouve relié à la source de tension non interruptible (16) que par l'interrupteur de siège (12) et par l'interrupteur de ceinture de siège (14), et **en ce que** le premier circuit à transistors (10a) délivre un signal de logique de séquence au deuxième circuit à transistors (10b) et le maintient même quand la source de tension pouvant être contactée et coupée (20) est coupée.

8. Circuit séquentiel selon l'une des revendications 1 à 7, **caractérisé en ce que** le premier et le deuxième circuit à transistors (10a, 10b) contiennent des transistors qui se trouvent soit dans un état saturé en courant, soit dans un état de blocage quand la source de tension pouvant être contactée et coupée (20) est contactée.

9. Circuit séquentiel selon l'une des revendications 1 à 8, **caractérisé en ce que** le premier circuit à transistors (10a) contient un circuit de temporisation R-C, qui est relié à l'interrupteur de siège (12) par l'intermédiaire d'une diode Zener (D3), pour empêcher un signal de séquence erroné qui résulterait de l'ouverture temporaire de l'interrupteur de siège (12).

10. Circuit séquentiel selon l'une des revendications 1 à 9, **caractérisé en ce que** la source de tension pouvant être contactée et coupée (20) est un branchement de sortie d'un contacteur d'allumage (21) dont le branchement d'entrée est relié à une batterie (16), sachant qu'un affichage d'une séquence erronée ne s'effectue que quand le contacteur d'allumage (21) se trouve dans sa position « marche ».

11. Circuit séquentiel selon la revendication 10, **caractérisé en ce que** le premier circuit à transistors (10a) délivre un signal logique de séquence au deuxième circuit à transistors (10b) et le maintient même quand le contacteur d'allumage (21) est dans sa position d'arrêt.

12. Circuit séquentiel 1 selon l'une des revendications 1 à 11, **caractérisé en ce que** l'interrupteur de siège (12) est relié par l'intermédiaire d'un circuit de temporisation à un premier transistor (Q3), dont l'émetteur est à la terre, **en ce que** le collecteur du premier transistor (Q3) est relié à la base et au collecteur d'un premier de deux transistors en cascade (Q2), **en ce que** la base du deuxième transistor en cascade (Q1) est reliée à l'interrupteur de ceinture de siège (14) et **en ce que** le premier transistor en cascade (Q2) ne délivre un signal d'activation au deuxième circuit à transistors (10b) que quand l'interrupteur de siège (12) est fermé avant la fermeture de l'interrupteur de ceinture de siège (14).

13. Circuit séquentiel selon la revendication 12, **caractérisé en ce que** l'interrupteur de siège (12) est relié par une diode Zener (D3) à un circuit de temporisation, sachant que la tension Zener de la diode Zener (D3) est plus grande que la chute de tension par les transistors disposés en cascade (Q1, Q2), quand ceux-ci se trouvent dans leur état de saturation en courant, et **en ce que** les transistors disposés en cascade (Q1, Q2) sont reliés au circuit de temporisation pour empêcher le premier transistor (Q3) de contacter quand l'interrupteur de siège (12) est ouvert.

14. Circuit séquentiel selon l'une des revendications 1 à 13, **caractérisé en ce que** le deuxième circuit à transistors (10b) contient un transistor de commande qui est actif dans un mode d'activation pour mettre le point de sortie (18a) à la terre et permettre l'exploitation du véhicule indépendamment de la disposition des relais dans le circuit séquentiel du siège et de la ceinture de siège.
